# FASCICULE DE BREVET EUROPEEN

(11) **EP 0 990 833 B1**
(45) Date de publication et mention de la délivrance du brevet: **03.11.2004**
(21) Numéro de dépôt: 99118918.4
(22) Date de dépôt: 25.09.1999
(51) Int. Cl.: F16M 11/14

(54) **Support mural pour boîtier de caméra de télévision**
Wandbefestigung für Fernsehkameragehäuse
Wall mounting for television camera housing

(30) Priorité: 02.10.1998 IT VI980189
(43) Date de publication de la demande: 05.04.2000
(73) Titulaire: Videotec s.r.l., 36015 Schio (Vicenza) (IT)
(72) Inventeur: Grotto, Alessio, 36015 Schio (Vicenza) (IT)
(74) Mandataire: Bettello, Pietro

(56) Documents cités:
- FR-A- 2 614 438
- US-A- 5 790 910

## Description

La présente invention concerne un support mural pour boîtier de caméra de télévision selon le préambule de la revendication 1, et comme connu par US-5 790 910

Il est connu que, pour le contrôle des environnements intérieurs des bâtiments et des espaces extérieurs à ces bâtiments, de même que pour le contrôle de processus industriels, on fait appel à ce qu'on appelle la "télévision en circuit fermé" (TVCC).

Les installations de TVCC comprennent évidemment au moins une caméra de télévision capable de reproduire la zone désirée, de manière à permettre à un opérateur de visionner ladite zone et quelquefois à permettre d'enregistrer les images de cette zone.

Ces installations sont largement utilisées dans des bâtiments soumis à une surveillance spéciale comme les banques, bien qu'elles soient maintenant utilisées également dans des immeubles d'habitation.

Afin de soustraire la caméra de télévision aux intempéries, ainsi que pour éviter des actes de violence infligés à la caméra de télévision elle-même, aussi bien par vandalisme que pour mettre intentionnellement ladite caméra de télévision hors d'usage afin de faciliter une intrusion ou analogue, on la place généralement dans un boîtier approprié qui porte en position frontale une vitre ou un autre élément transparent dans la zone proche de l'objectif de la caméra de télévision. Le boîtier pour la caméra de télévision doit naturellement être supporté par un dispositif approprié, généralement fixé à un mur ou à un plafond. Dans le cas où le support doit être fixé à un mur, on prévoit qu'il présente une plaque à appliquer au mur en question, une console étant solidaire de ladite plaque et portant, au niveau de son extrémité libre, les moyens aptes à permettre la fixation amovible du boîtier contenant la caméra de télévision.

Ces moyens permettent toujours la possibilité de régler de façon précise les paramètres de positionnement de la caméra de télévision.

En particulier, il est possible de modifier l'inclinaison de l'axe longitudinal de la caméra de télévision, et par conséquent de son objectif, par rapport à l'horizontale, ainsi que de faire tourner l'ensemble du corps dans le boîtier et, par conséquent, de faire tourner la caméra de télévision autour d'un axe vertical qui passe par l'extrémité de la console décrite plus haut.

Le but de la présente invention est de créer un support mural pour boîtier de caméra de télévision qui soit particulièrement aisé à utiliser et qui soit, en outre, simple et économique du point de vue de la construction, en étant en même temps sûr, en ce sens que les moyens qui supportent le boîtier ne doivent pas s'incliner une fois convenablement fixés dans la position désirée.

Selon l'invention, ceci s'obtient conformément aux caractéristiques de la revendication annexée. Les moyens qui permettent la fixation amovible du boîtier sont configurés à la façon d'un logement sensiblement cylindrique, à fond fermé, placé solidement au droit de l'extrémité libre de la console.

A l'intérieur de ce logement, peut être inséré un logement en coiffe, lequel est solidaire, en position inférieure, d'une plaque à laquelle le boîtier peut être fixé d'une façon rigide mais amovible.

Ladite plaque porte en son centre un trou traversant, justement dans la zone dans laquelle la coiffe est fixée.

Dans le trou précité, est insérée une structure en forme de champignon, à tête de forme sensiblement sphérique, qui va se placer dans la coiffe citée plus haut.

Inversement, l'extrémité de la tige du champignon va se placer contre le fond du logement précité.

Il est en particulier prévu que la fixation amovible entre le fond et le siège est assuré par une vis possédant une tête disposée à l'extérieur par rapport au logement lui-même et une tige qui, en passant dans un trou spécialement prévu dans le fond du logement, s'engage en prise dans une cavité présente dans la tige du champignon. Il est prévu en particulier que le vissage de ladite vis est susceptible de provoquer la ferme adhérence mutuelle entre l'élément en coiffe et les parois intérieures du logement et, par conséquent, le blocage, dans une position bien déterminée, de la plaque et par conséquent du boîtier fixé à celle-ci.

Ces caractéristiques ainsi que d'autres sont décrites en détail ci-après, en faisant référence à une forme particulière de réalisation, donnée à titre d'exemple non limitatif, à l'aide des planches de dessins annexées où :
la Fig. 1 (planche I) représente un boîtier pour caméra de télévision monté sur le support selon l'invention ;
la Fig. 2 représente une vue en perspective d'ensemble du support selon l'invention;
la Fig. 3 (planche II) représente une vue éclatée du support selon l'invention.

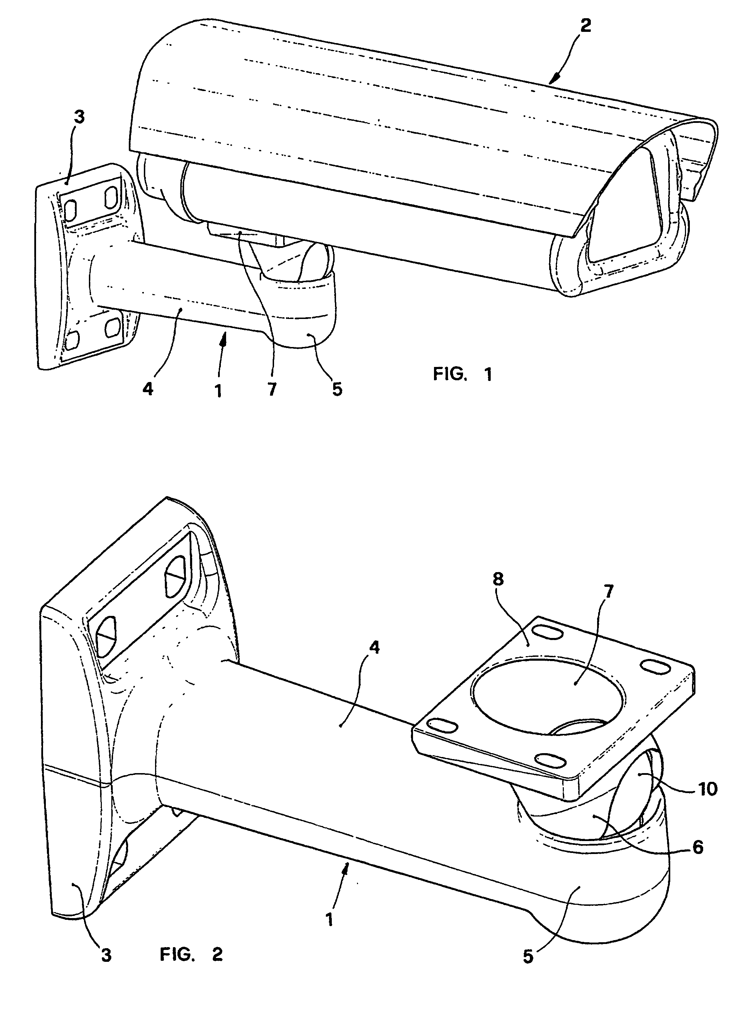

La figure 1 représente un support 1 destiné à être appliqué sur un mur situé en arrière, non représenté sur la figure, et apte à soutenir un boîtier 2 dans lequel est contenue une caméra de télévision.

Le support 1 possède une plaque 3 qui va effectivement se placer sur le mur et qui y est fixé de façon connue en soi, par exemple à l'aide de chevilles à expansion.

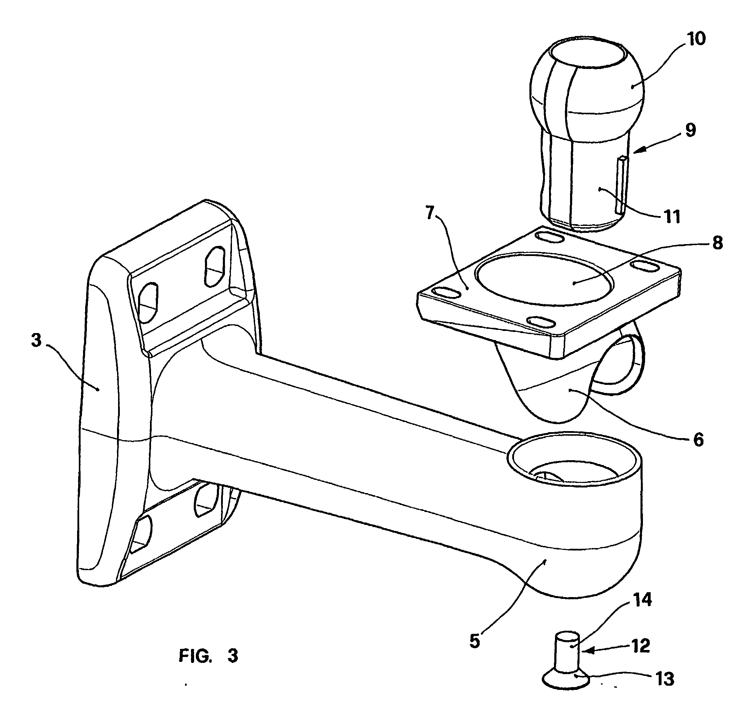

Une console 4 est solidaire de la plaque 3 et, au droit de son extrémité libre, elle présente un logement 5 (voir aussi Fig. 2 et 3) de forme sensiblement cylindrique à fond globalement fermé.

Dans ledit logement peut être inséré un élément 6 en forme de coiffe, dont est solidaire, en position supérieure, une plaque 7 à laquelle le boîtier 2 peut être fixé, ici aussi d'une façon connue en soi qui ne sera pas décrite ultérieurement.

Dans la plaque 7 est pratiqué un trou traversant 8, dont les parois sont situées dans le prolongement de l'extérieur de la coiffe 6. Dans ce trou 8, peut être insérée une structure en forme de champignon 9 qui possède une tête 10 de forme sensiblement sphérique.

Comme on le voit sur la Fig. 2, ladite tête peut se placer dans la coiffe 6, tandis que l'extrémité inférieure de la tige 11 du champignon va se placer contre le fond du logement 5.

La fixation amovible ou démontable entre la structure en forme de champignon et le logement 5 est assurée par une vis 12 ayant une tête 13 disposée extérieurement par rapport au logement 5 et une tige 14 qui passe dans un trou prévu dans le fond dudit logement 5, pour s'engager en prise dans une cavité prévue à cet effet dans la tige 11 du champignon 9.

En pratique, le vissage de la vis 12 est capable de déterminer une forte adhérence réciproque entre la coiffe 6 et les parois intérieures du logement 5, grâce au fait que la tête 10 est tirée vers le fond du logement 5, ce qui provoque une compression élastique de la coiffe 6, qui est destinée à se déformer légèrement vers l'extérieur, en allant de cette façon adhérer fortement aux parois intérieures du logement 5.

Ainsi, grâce au vissage de la vis 12, on détermine le blocage, dans une position bien déterminée, de la plaque 7 et par conséquent du boîtier qui y est fixé, par rapport au logement 5 qui reste fixe.

Du point de vue fonctionnel, après avoir fixé la plaque 6 au mur, on procédera tout d'abord à la fixation de la caméra de télévision 2 à la plaque 7. Ensuite, on réglera le positionnement exact de la caméra de télévision et en particulier de son axe optique, en fonction des exigences de l'utilisateur.

Comme on peut le voir, il est possible de régler l'inclinaison de l'axe optique par rapport à l'horizontale, de même qu'il est possible de faire tourner l'ensemble de la plaque 7 autour de l'axe vertical du logement 5.

Il est en outre possible d'incliner légèrement la plaque 7 en la faisant tourner autour d'un axe horizontal qui passe par le centre de la tête sphérique 10.

Grâce au support conforme à l'invention, on peut régler facilement le positionnement précis du boîtier et, par conséquent, de la caméra de télévision qui y est contenue, avec une extrême simplicité en agissant sur une vis ; en même temps, cette fixation est durable et très stable.

En outre, il est très simple de modifier le positionnement de la caméra de télévision dans le cas où les exigences de l'utilisateur devraient changer.

Enfin, le support conforme à l'invention est simple du point de vue de la construction.

## Revendications

1. Support mural pour boîtier de caméra de télévision, comprenant une plaque (3) destinée à être appliquée contre un mur, une console (4) solidaire de ladite plaque et portant, à son extrémité libre, des moyens de fixation amovible pour le boîtier (2) contenant la camera de télévision, le positionnement du boîtier étant réglable, lesdits moyens de fixation amovible comprenant un logement (5) de forme sensiblement cylindrique, apte à recevoir un élément en forme de coiffe (6), le support comprenant une structure en forme de champignon (9) ayant une tête (10) sensiblement sphérique qui va se placer à l'intérieur de la coiffe (6), la fixation amovible entre la structure en forme de champignon (9) et le logement (5) étant assurée par une vis (12) ayant une tête (13) disposée extérieurement au logement (5), le support étant **caractérisé par le fait que** le logement (5) possède un fond sensiblement fermé, que la coiffe (6) est solidaire de la surface inférieure d'une plaque (7) de fixation au boîtier (2), de façon rigide et amovible, ladite plaque comportant un trou traversant (8) dans la zone placée au droit de la coiffe (6), ce trou étant apte à recevoir la structure en forme de champignon (9), qui comprend une tige (11) dont l'extrémité va se placer contre le fond du logement (5), et que la vis (12) comprend une tige (14) qui passe dans un trou pratiqué dans le fond de ce logement (5) et s'engage en prise dans une cavité ménagée dans la tige (11) de la structure en forme de champignon (9), le vissage de ladite vis induisant une adhérence mutuelle entre la coiffe (6) et les parois intérieures du logement (5), ce qui provoque le blocage par rapport audit logement (5) de la plaque (7) et du boîtier (2) fixé à celle-ci dans une position déterminée.

## Claims

1. Wall bracket for a television camera case, comprising a plate (3) designed to be fitted against a wall, a bracket arm (4) integral with the said plate and having, at its free end, means of detachable mounting for the case (2) containing the television camera, the positioning of the case being adjustable, the said means of detachable mounting comprising a socket (5) substantially cylindrical in shape, capable of receiving an element in the shape of a cap (6), the bracket comprising a mushroom shaped structure (9) with a substantially spherical head (10) which goes inside the cap (6), the detachable mounting between the mushroom shaped structure (9) and the socket (5) being provided by a screw (12) with a head (13) placed outside the socket (5), the bracket being **characterised by** the fact that the socket (5) has a substantially closed bottom, that the cap (6) is integral with the lower surface of a plate (7) for mounting the case (2), in a rigid detachable manner, the said plate comprising a through hole (8) in the area perpendicular to the cap (6), this hole being capable of receiving the mushroom shaped structure (9), which comprises a stem (11) the end of which goes against the bottom of the socket (5), and that the screw (12) comprises a shank (14) which passes through a hole made in the bottom of this socket (5) and is held in a cavity provided in the stem (11) of the mushroom shaped structure (9), the tightening of the said screw inducing mutual adhesion between the cap (6) and the inside walls of the socket (5), which causes the plate (7) and the case (2) fixed to it to be jammed in a selected position in relation to the said socket (5).

## Patentansprüche

1. Wandbefestigung für Fernsehkameragehäuse umfassend eine Platte (3) zur Anbringung an eine Wand, eine mit der Platte fest verbundene Konsole (4), welche an ihrem freien Ende lösbare Befestigungsmittel für das die Fernsehkamera enthaltende Gehäuse (2) besitzt, wobei die Positionierung des Gehäuses regulierbar ist und die lösbaren Befestigungsmittel einen im wesentlichen zylindrischen Lagersitz (5) umfassen, der dazu dient, ein Element in Form einer Kappe (6) aufzunehmen, wobei die Befestigungseinrichtung eine Struktur in Form eines Pilzes (9) mit einem runden Kopf (10) besitzt, der sich in der Kappe (6) verankert, wobei die lösbare Befestigung zwischen der Struktur in Form eines Pilzes (9) und dem Lagersitz (5) mittels einer mit einem außen am Lagersitz (5) angeordneten Kopf (13) versehenen Schraube (12) gewährleistet ist, wobei die Befestigungseinrichtung **dadurch gekennzeichnet ist, dass** der Lagersitz (5) einen im wesentlichen geschlossenen Boden besitzt, dass die Kappe (6) mit der unteren Fläche einer Platte (7) zur festen und lösbaren Befestigung am Gehäuse (2) kraftschlüssig verbunden ist, wobei die Platte ein Durchgangsloch (8) in den Bereich vor der Kappe (6) besitzt, welches zur Aufnahme der Struktur in Form eines mit einem Schaft (11) versehenen Pilzes (9) dient, dessen Ende gegen den Boden des Lagersitzes (5) anschlägt, und dass die Schraube (12) einen Schaft (14) besitzt, der durch ein Loch im Boden des Lagersitzes (5) hindurchgeführt wird und in eine in dem Schaft (11) der Struktur in Form eines Pilzes (9) befindliche Ausnehmung eingreift, wobei das Anziehen der Schraube eine wechselseitige kraftschlüssige Verbindung zwischen der Kappe (6) und den Innenseiten des Lagersitzes (5) bewirkt, wodurch die Blockierung in Bezug auf den Lagersitz (5) der Platte (7) und des an ihr in einer bestimmten Position befestigten Gehäuses (2) stattfindet.
